# DEMANDE DE BREVET EUROPEEN

(11) **EP 1 352 688 A1**
(43) Date de publication de la demande: **15.10.2003**
(21) Numéro de dépôt: 02405282.1
(22) Date de dépôt: 09.04.2002
(51) Int. Cl.: B01L 3/00, B29C 65/56, B29C 65/60

(54) **Porte échantillon miniaturisé**

(71) Demandeur: Brunner, Jean, 2300 La Chaux-de-Fonds (CH)
(72) Inventeur: Brunner, Jean, 2300 La Chaux-de-Fonds (CH)
(74) Mandataire: Gresset, Jean

(57) **Abrégé**

L'invention concerne un dispositif miniaturisé destiné au transport et à l'analyse d'un échantillon liquide, comportant:
- une plaque inférieure (10) dont la face supérieure (12) est percée d'un canal (14) destiné à recevoir ledit échantillon,
- une plaque supérieure (28) dont la face inférieure (30) est appliquée sur la face supérieure (12) de la plaque inférieure (10) et munie d'au moins un orifice disposé de manière à déboucher dans ledit canal, et
- des moyens pour rendre les deux plaques solidaires l'une de l'autre et fermer le canal (14) de manière étanche, constitués d'une pluralité de rivets (32) répartis tout autour du canal.

## Description

La présente invention concerne un dispositif miniaturisé destiné au transport et à l'analyse de micro-échantillons liquides, notamment par des méthodes optiques ou électrochimiques.

De tels dispositifs sont des outils particulièrement utiles dans le domaine de la chimie et de la biochimie, ainsi que l'attestent, par exemple, les publications suivantes: "Polymer microfabrication methods for microfluidic analytical applications" ( Holger Becker et AI. - Electrophoresis 2000, 21, 12-26) et "Fabrication of microfluidic systems in poly(dimethylsiloxane)" (J. Cooper McDonald - Electrophoresis 2000, 21, 27-40).

Ces dispositifs sont généralement utilisés en réseaux à haute densité regroupant plusieurs centaines d'unités. Par ailleurs, ils ne sont pas réutilisables. On comprend, dès lors, qu'il soit très important de les produire à faible coût et aussi miniaturisés que possible, sans que leur étanchéité et la précision de leurs dimensions, notamment, en soit affectées.

Le document WO 98/45693 décrit un tel porte échantillon, qui est formé de deux plaques en un matériau plastique collées ensemble, soit:
- une plaque inférieure dont la face supérieure est percée d'un canal destiné à recevoir l'échantillon de liquide, et
- une plaque supérieure munie d'au moins un orifice disposé de manière à déboucher dans le canal.

Dans cette réalisation, le collage des deux plaques fait appel à des adhésifs polymérisables qui doivent être déposés en couche suffisamment épaisse et uniforme pour assurer un bon scellement mais suffisamment mince pour éviter l'envahissement du canal. Il s'agit donc d'une technologie délicate à mettre en oeuvre et donc coûteuse.

Le document US 4 756 884 propose un dispositif du même type dans lequel l'une des plaques est dotée, le long des bords du canal, d'une arête à section triangulaire faisant partie intégrante de la plaque et constituant un directeur d'énergie qui permet de la lier à l'autre par soudage aux ultra-sons. L'expérience a, toutefois, montré que cette technique de soudage est complexe et qu'elle ne garantit pas l'étanchéité du canal tout au long de son parcours.

La présente invention a pour but de fournir un porte échantillon du type ci-dessus, mais assurant, pour un prix de revient raisonnable, une parfaite étanchéité de son canal.

De façon plus précise, l'invention concerne un dispositif miniaturisé destiné au transport et à l'analyse d'un échantillon liquide, du type comportant:
- une plaque inférieure dont la face supérieure est percée d'un canal destiné à recevoir le liquide,
- une plaque supérieure dont la face inférieure est appliquée sur la plaque inférieure et munie d'au moins un orifice de remplissage disposé de manière à déboucher dans le canal, et
- des moyens pour rendre les deux plaques solidaires l'une de l'autre et fermer la canal de manière étanche,
caractérisé en ce que lesdits moyens comportent une pluralité d'organes de serrage et de maintien des plaques l'une contre l'autre, qui sont répartis tout autour du canal.

Selon une forme de réalisation préférée, les organes de serrage et de maintien sont des rivets qui peuvent être constitués par des têtons formés sur une face de l'une des plaques et prenant place dans des trous pratiqués dans l'autre plaque. De façon avantageuse, ces trous se terminent par une portion élargie dans laquelle est écrasée l'extrémité des têtons.

Selon une autre forme de réalisation préférée, les organes de serrage et de maintien sont des vis et écrous.

Le dispositif selon l'invention comporte encore les caractéristiques suivantes :
- le canal est longé, de chaque côté, par un rebord incrusté dans la plaque supérieure sous l'action des organes de serrage et de maintien ;
- le canal comporte une cuvette formant réservoir, à l'endroit où débouche l'orifice de remplissage ;
- cet orifice a la forme d'un entonnoir ;
- les deux plaques sont des pièces injectées.

D'autres caractéristiques de l'invention ressortiront de la description qui va suivre, faite en regard du dessin annexé, dans lequel:
- les figures 1a et 1b représentent la plaque inférieure du dispositif, vue respectivement de dessus et en coupe selon A-A;
- les figures 2a et 2b représentent la plaque supérieure du dispositif, vue respectivement de dessus et en coupe selon B-B; et
- les figures 3 et 4 sont des vues en coupe selon A-A du dispositif assemblé, respectivement avant et après la solidarisation des deux plaques.

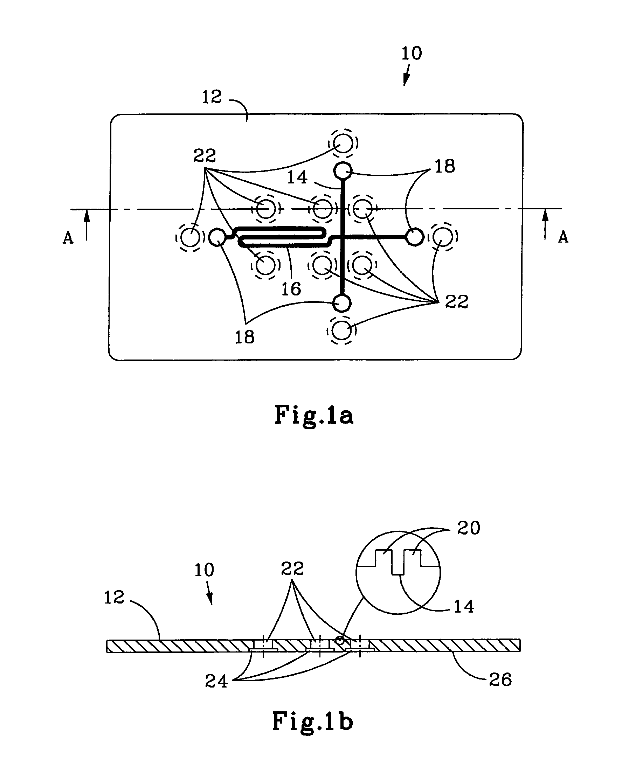

On se référera, tout d'abord, aux figures 1a et 1b qui montrent une plaque rigide rectangulaire 10 en plastique, appelée plaque inférieure ou fond, qui a, typiquement, une longueur de 50 mm, une largeur de 30 mm et une épaisseur de 2 mm.

La face supérieure 12 de cette plaque est creusée d'un canal 14 à section sensiblement carrée, de 0.08 mm de côté, et en forme de croix. Son bras 16, plus long que les trois autres, est replié en trois portions parallèles. Les extrémités des quatre bras de la croix se terminent par une cuvette 18 ayant, typiquement, un diamètre de 1,95 mm. Bien entendu, la canal 14 peut avoir une forme quelconque.

De manière très avantageuse, le canal 14 et les quatre cuvettes 18 sont longés, de chaque côté, par un rebord 20, visible seulement sur la figure 1b, ayant initialement, dans l'exemple décrit, une section sensiblement rectangulaire de 0,1 mm d'épaisseur et de 0,2 mm de largeur.

Le fond 10 est percé, tout autour du canal 14 et des cuvettes 18, d'une pluralité de trous circulaires 22 dont la portion 24, débouchant sur sa face inférieure 26, est élargie. Typiquement, les trous 22, au nombre de dix, ont un diamètre de 2,10 mm alors que les portions élargies 24 ont un diamètre de 3 mm et une profondeur de 2 mm.

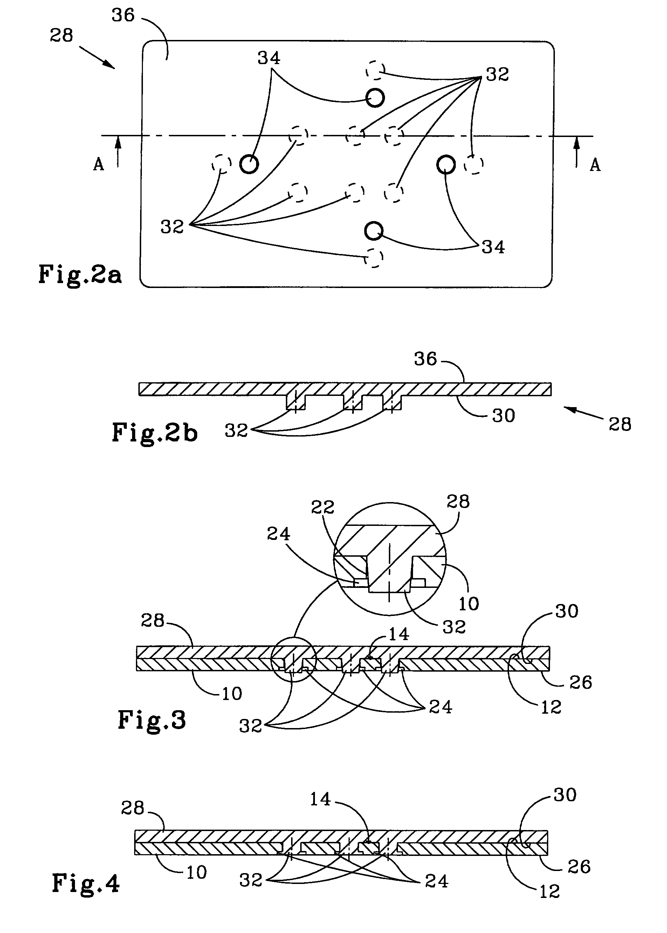

On se référera maintenant aux figures 2a et 2b qui montrent une deuxième plaque rigide rectangulaire 28, appelée plaque supérieure ou couvercle, qui est destinée à prendre place sur la plaque inférieure 10, de même dimensions qu'elle et, comme elle, en plastique.

La face inférieure 30 de cette plaque est munie d'une pluralité de têtons 32 disposés de façon à ce que, lorsque les deux plaques sont superposées, ils prennent place dans les trous 22. Comme il apparaît mieux sur la figure 3, ces têtons ont un profil légèrement troncônique et une longueur initiale supérieure à l'épaisseur du fond 10. Dans l'exemple décrit, les têtons sont au nombre de dix. Typiquement, leur longueur est de 2,30 mm, leur diamètre à la base de 2 mm et leur diamètre au sommet de 1,80 mm.

La plaque supérieure 28 est, en outre, percée de quatre orifices 34 en forme d'entonnoir dont la partie évasée se trouve du côté de sa face supérieure 36. Ces orifices sont positionnés de manière à déboucher exactement dans les cuvettes 18 de la plaque inférieure 10.

Dans ce mode de réalisation, la plaque inférieure 10, avec le canal 14, les cuvettes 18, le rebord 20 et les trous 22, ainsi que la plaque supérieure 28, avec les têtons 32 et les orifices 34, sont réalisées par injection, selon des techniques connues de l'homme de métier.

A titre indicatif, les plastiques utilisés pour le fond 10 et le couvercle 28 peuvent être du polystyrène, du polycarbonate ou du polymétacrylate. Lorsque le dispositif est destiné à l'analyse par des méthodes optiques, il va de soi que ces matériaux doivent être transparents.

La figure 3 montre le couvercle 28 placé sur le fond 10, la face inférieure du couvercle étant au contact de la face supérieure 12 du fond et les têtons 32 engagés dans les trous 22. On remarque que l'extrémité des têtons 32 dépasse la face inférieure 26 du fond 10.

Pour réaliser la liaison des deux plaques 10 et 28 l'une à l'autre, l'ensemble est placé retourné (couvercle 28 en bas) sur un plan de travail et une forte pression est exercée sur le fond 10. Les extrémités des têtons 32 sont alors écrasées à chaud, à l'aide de tout équipement approprié connu de l'homme de métier, de manière à remplir les portions élargies 24 des trous 22. Ainsi, comme représenté sur la figure 4, se forment des rivets qui, après refroidissement, maintiennent les deux plaques fermement accolées l'une à l'autre, tout en assurant la fermeture étanche du canal 14 et des cuvettes 18.

Lors de cette opération, le rebord 20 du fond 10 s'incruste dans le couvercle 28 et renforce l'étanchéité de l'assemblage.

Le dispositif ainsi réalisé peut alors recevoir son échantillon de liquide qui est injecté dans le canal 14 par l'orifice 34 correspondant à la cuvette 18 du bras 16, cette cuvette faisant office de réservoir. Les autres orifices 34 servent à l'évacuation de l'air lors du remplissage.

Selon une variante de réalisation non représentée, les rivets que forment les têtons 32 après écrasement de leur extrémité peuvent être remplacés par des vis et écrous, avantageusement en laiton, dont on veillera à noyer les extrémités dans les plaques afin d'éviter toute surépaisseur.

Ainsi est proposé un porte échantillon miniaturisé de structure particulièrement simple, garantissant une excellente étanchéité de son canal et dont la fabrication ne fait pas intervenir de procédés coûteux (lithographie, par exemple). Un tel dispositif a donc un prix de revient très bas, sans que cela affecte sa qualité.

## Revendications

1. Dispositif miniaturisé destiné au transport et à l'analyse d'un échantillon liquide, comportant:
- une plaque inférieure (10) dont la face supérieure (12) est percée d'un canal (14) destiné à recevoir ledit échantillon,
- une plaque supérieure (28) dont la face inférieure (30) est appliquée sur la face supérieure (12) de la plaque inférieure (10) et munie d'au moins un orifice (34) disposé de manière à déboucher dans ledit canal, et
- des moyens pour rendre les deux plaques solidaires l'une de l'autre et fermer le canal (14) de manière étanche,
**caractérisé en ce que** lesdits moyens comportent une pluralité d'organes de serrage et de maintien (32) des plaques l'une contre l'autre, qui sont répartis tout autour du canal (14).

2. Dispositif selon la revendication 1, **caractérisé en ce que** lesdits organes sont des rivets.

3. Dispositif selon la revendication 2, **caractérisé en ce que** les rivets sont constitués par des têtons (32) formés sur une face (30) de l'une des plaques (28) et prenant place dans des trous (22) pratiqués dans l'autre plaque (10).

4. Dispositif selon la revendication 3, **caractérisé en ce que** lesdits trous (22) se terminent par une portion élargie dans laquelle est écrasée l'extrémité des têtons (32).

5. Dispositif selon la revendication 3, **caractérisé en ce que** les têtons (32) font partie intégrante de ladite plaque (10).

6. Dispositif selon la revendication 1, **caractérisé en ce que** lesdits organes sont des vis et écrous.

7. Dispositif selon l'une des revendications 1 à 6, **caractérisé en ce que** ledit canal (14) est longé, de chaque côté, par un rebord (20) incrusté dans la plaque supérieure (28) sous l'action des organes de serrage et de maintien (32).

8. Dispositif selon l'une des revendications 1 à 7, **caractérisé en ce que** ledit canal (14) comporte une cuvette (18), formant réservoir, à l'endroit où débouche ledit orifice (34).

9. Dispositif selon l'une des revendications 1 à 8, **caractérisé en ce que** ledit orifice (34) a la forme d'un entonnoir.

10. Dispositif selon l'une des revendications 1 à 9, **caractérisé en ce que** les deux plaques (10, 28) sont des pièces injectées.
